# EUROPÄISCHE PATENTSCHRIFT

(11) **EP 1 375 056 B1**
(45) Veröffentlichungstag und Bekanntmachung des Hinweises auf die Patenterteilung: **02.08.2006**
(21) Anmeldenummer: 03012997.7
(22) Anmeldetag: 10.06.2003
(51) Int. Cl.: B23P 19/06, B25B 13/06, B25B 23/14, B25B 29/02

(54) **Hydraulische Spannvorrichtung und deren Verwendung**
Hydraulical tensioner and its use
Tendeur hydraulique et utilisation de ce dernier

(30) Priorität: 17.06.2002 DE 10226961
(43) Veröffentlichungstag der Anmeldung: 02.01.2004
(73) Patentinhaber: AS Tech Industrie- und Spannhydraulik GmbH, 52511 Geilenkirchen (DE)
(72) Erfinder: Schlösser, Arndt, 41836 Hückelhoven (DE)
(74) Vertreter: Kohlmann, Kai

(56) Entgegenhaltungen:
- WO-A-95/33597
- DE-A- 2 208 280
- DE-A- 3 047 705
- DE-A- 4 238 922
- DE-A- 19 629 352
- GB-A- 2 236 824
- US-A- 5 871 205

## Beschreibung

Die Erfindung betrifft eine hydraulische Spannvorrichtung zum Spannen und/oder Lösen von Zugankermutter tragenden Zugankern mit einem Zylinderblock in dem mehrere Kolben beweglich in achsparallelen und kreisförmig zueinander angeordneten Zylindern geführt sind, wobei die Kolbenräume sämtlicher Zylinder über Durchgänge und/oder Leitungen für ein Hydraulikmedium miteinander verbunden sind, und einem jedem Kolben zugeordneten Zugelement zum Erfassen der Zuganker sowie eine bevorzugte Verwendung einer derartigen Spannvorrichtung.

Solch eine Spannvorrichtung ist aus der GB-A-2 236 824 bekannt.

Undichtigkeiten an Flanschverbindungen von Hochvakuumanlagen, sind problematisch, da sich diese häufig erst beim Erzeugen des Vakuums zeigen, was bis zu mehrere Tage dauern kann. In Ultrahochvakuum(UHV)-Apparaturen kommen CF-Flanschverbindungen zum Einsatz, die aus zwei gleichen Flanschen mit einem Flach-Dichtring aus Kupfer, Zugankern, Zugankermuttern und Unterlegscheiben bestehen. Die Flanschgrößen sind in der ISO 3669 genormt. Die Anzahl der zu verschraubenden Muttern reicht von 6 x M4 (DN16CF) bis zu 32 x M8 (DN250CF).

Bei der Montage der Flansche fügt sich der Flach-Dichtring mit leichtem Spiel in die äußere Flanschausdrehung ein und bewirkt eine Zentrierung der Flanschverbindung. Durch Anziehen der Flanschschrauben drückt sich die Flanschschneide in den Flach-Dichtring ein. Das Anziehen erfolgt manuell mit einem Drehmomentschlüssel. Durch das manuelle Anziehen der Schrauben kann es zu einer Zerstörung der Flach-Dichtringes kommen, die zu Undichtigkeiten an den UHV-Apparaturen führen.

Aus der DE 42 38 922 C2 ist eine hydraulische Spannvorrichtung zum Spannen und Lösen von Zugankern bei mehrteilig zusammengesetzten Gasturbinenrotoren bekannt. Die hydraulische Spannvorrichtung sitzt mit einem Zylinderring auf einem Wellenflansch des Gasturbinenrotors. In dem Zylinderring sind Kolben eingesetzt, wobei sich im Inneren des Zylinderringes ein Kolbenraum bildet, der jeweils oben bzw. unten durch Stützringe begrenzt wird. Die Kolbenräume sind durch Querbohrungen in Reihe geschaltet, so dass das Hydraulikmedium von einem Kolbenraum zum Anderen fließen kann. Durch eine Bohrung im Kolben wird ein Fangbolzen gesteckt, der durch eine Sechskantmutter gehalteu wird. Am gegenüberliegenden Ende des Fangbolzens ist eine Nuss angeordnet, die den Zuganker erfasst. Der Spannvorgang der Zuganker umfasst folgende Schritte:
- Erfassung und Längung der Zuganker durch Druckaufbau in den Kolbenräumen,
- manuelles Beidrehen der Zugankermuttern,
- Belastung der Zugankermuttern durch Druckabbau in dem Kolbenräumen.

Mit der bekannten Spannvorrichtung lassen sich daher mehrere auf dem Umfang eines Flansches angeordnete Zuganker gleichzeitig und gleichmäßig Spannen.

Aus der DE 2 208 280 A ist eine hydraulische Spannvorrichtung mit einem Druckzylinder bekannt, der eine auf das über die Bolzenmutter hinausragende Ende des Schraubenbolzens aufgeschraubte Zugspannhülse betätigt. Die Spannvorrichtung weist weiterhin eine drehbar im Inneren der Vorrichtung angeordnete Nuss zum Antrieb der Bolzenmutter auf. Die Nuss befindet sich im Inneren eines Abstütz-Unterteils der Vorrichtung. Zwischen dem Hauptteil des Druckzylinders und dem Abstütz-Unterteil der Vorrichtung befindet sich eine Drehantriebsvorrichtung, die mit der Nuss gekoppelt ist und durch den gleichen Öldruck wie der Druckzylinder zum Spannen des Schraubenbolzens betätigt wird. Die Drehantriebsvorrichtung wird durch einen äußeren und einen drehbaren inneren Kreisring gebildet, der in zwei quaderförmigen Zähnen endet, die wiederum in einen Schlitz im oberen Teil der Nuss eingreifen. Durch Anordnung verschiedener Dichtelemente zwischen den beiden Kreisringen der Drehantriebsvorrichtung kann der drehbare innere Ring durch RPaufschlagen mit Öldruck maximal eine halbe Umdrehung der Nuss und damit der Mutter bewirken. Durch die gleichzeitige Beaufschlagung des Hydraulik-Spannzylinders wird gleichzeitig der Schraubenbolzen gespannt. Umfasst die Verbindung der mit der Spannvorrichtung zu verbindenden Teile mehrere Schraubenbolzen, können diese Schraubenbolzen aufeinander folgend mit Hilfe einer einzigen Spannvorrichtung befestigt werden. Alternativ ist es möglich, genauso viel Vorrichtung wie Schraubenbolzen zu verwenden und alle Vorrichtungen gleichzeitig mit Hilfe des gleichen Hydraulikdruckes zu betätigen.

Die DE 22 29 073 C2 offenbart eine Vorrichtung zum gleichzeitigen Spannen mehrerer Schraubenbolzen sowie zum gleichzeitigen An- oder Losdrehen der zugehörigen Befestigungsmuttern, die ein Traggestell aufweist, das auf das mit den Schraubenbolzen versehene Bauteil aufsetzbar ist. Das Traggestell weist Aussparungen für den Durchtritt der Schraubenbolzen und Befestigungemuttern auf. Die Vorrichtung weist weiterhin an den Schraubenbolzen ansetzbare Spannaggregate auf, die aus wenigstens einem Zylinder mit darin verschiebbaren Kolben bestehen, wobei der Kolben auf ein mit den zu spannenden Schraubenbolzen verschraubbares Anlagestück wirkt. An dem Traggestell sind außerdem Schraubeinrichtungen für jede Befestigungsmutter angebracht, wobei jede Schraubeinrichtung ein Betätigungsritzel aufweist, das jeweils in eine Außenverzahnung der Befestigungsmutter eingreift. In einer Ausgestaltung der Vorrichtung ist es vorgesehen, dass alle Betätigungsritzel für die Befestigungsmuttern über jeweils zwischengeschaltete Rutschkupplungen getrieblich miteinander verbunden sind und nur eine Antriebseinheit für sämtliche Betätigungsritzel vorgesehen ist. Die Betätigungsritzel sind jeweils mit einer Welle drehfest verbunden, die seitlich am Traggestell gelagert ist. Am oberen Ende jeder Welle sind Kettenräder angeordnet, die über eine Rutschkupplung mit der Welle in drehmomentübertragender Verbindung stehen. Von den Kettenrädern führen Ketten zu den Wellen der benachbarten Spannaggregate. Die derart miteinander verbundenen Spannaggregate werden von einer oder mehreren Antriebseinheiten in Drehung versetzt.

Aus der GB-A-2 236 824 A ist eine hydraulische Spannvorrichtung zum Spannen und/oder Lösen von Zugankermutter tragenden Zugankern bekannt, bei der in einem zylinderblock mehrere hydraulische Schubvorrichtungen achsparallel zueinander geführt sind. Jeder hydraulischen Schubvorrichtung ist ein auf ihr aufliegendes Zugelement zum Erfassen der Zuganker zugeordnet. In jeder hydraulischen Schubvorrichtung für die Zuganker ist eine aus Hartgummi bestehende Rolle drehbar gelagert, so dass sie mit dem Außenmantel der runden Zugankermutter in Berührung kommt. Die Rollen sind wiederum so angeordnet, dass sie reibschlüssig mit einem zentral angeordneten Reibrad in Berührung stehen. Das zentrale Reibrad treibt daher über die Rollen unmittelbar die in den hydraulischen Schubvorrichtungen befindlichen Zugankermutternan. Um die hydraulische Spannvorrichtung in Betriebsbereitschaft zu bringen, müssen zunächst die Zugankermuttern mit herkömmlichen Werkzeugen auf die Zuganker aufgesetzt werden.

Ausgehend von diesem Stand der Technik liegt der Erfindung die Aufgabe zugrunde, eine hydraulische Spannvorrichtung zu schaffen, die eine weitgehend automatisierte Verschraubung von Flanschverbindungen mittels eines einfach aufgebauten Antriebs ermöglicht, der dennoch ein gleichmäßiges Anzugsmoment sämtlicher Zugankermuttern, unabhängig von deren Ausgangslage auf den Zugankern gewährleistet. Außerdem soll ein neues Einsatzgebiet für eine solche Vorrichtung vorgeschlagen werden.

Im einzelnen besteht die Lösung bei einer hydraulischen Spannvorrichtung der eingangs erwähnten Art darin,
- dass in Verlängerung jedes Zugelementes eine Nuse zur Aufnahme der Zugankermutter drehbar in dem Zylinderblock angeordnet und jede Nuss mit einem gemeinsamen Antrieb (5) verbunden ist,
- dass der gemeinsame Antrieb und jede Nuss kraftschlüssig miteinander verbunden sind,
- dass der Antrieb ein Reibelementumfasst, das mit einer äußeren Umfangsfläche (21) jeder Nuss in Berührung steht und
- dass jedes Zugelement mit einem gemeinsamen Antrieb verbunden ist, in dem ein Reibelement mit einer äußeren Umfangsfläche eines zylindrischen Abschnitts jedes Zugelementes in Berührung steht, wobei sich der zylindrische Abschnitt auf der Oberfläche des Kolbens abstützt.

Der gemeinsame Antrieb für jede Nuss ermöglicht es, sämtliche Zugankermuttern gleichzeitig bis zur Anlage am Flansch beizudrehen. Die gleichmäßige Verformung des Flach-Dichtringes wird durch den gleichzeitigen und gleichmäßigen Druckabbau in den Kolbenräumen der Spannvorrichtung bewirkt.

Um ein gleichmäßiges Anzugsmoment sämtlicher Zugankermuttern, unabhängig von deren Ausgangslage auf den Zugankern zu gewährleisten, sind gemäß der Erfindung der gemeinsame Antrieb und jede Nuss kraftschlüssig miteinander verbunden. Der Kraftschluss hat zur Folge, dass beim Überschreiten eines insbesondere vorwählbaren Grenzdrehmomentes der Kraftfluss zwischen dem gemeinsamen Antrieb und der jeweiligen Nuss unterbunden wird.

Die Unterbrechung des Kraftflusses erfolge nach Art einer Rutsch-Kupplung dadurch, dass der gemeinsame Antrieb ein Reibelement, insbesondere ein Reibrad umfasst, das mit einer äußeren Umfangsfläche jeder Nuss in Berührung steht. Die kraftschlüssige Verbindung muss sich jedoch nicht zwingend zwischen dem Antrieb und jeder Nuss befinden, sondern kann auch zwischen der Nuss und der von ihr beizudrehenden Zugankermutter angeordnet sein, beispielsweise indem die Nuss einen elastischen Kugelring aufweist, der die Zugankermutter aufnimmt. Der Kugelring wird an seinem äußeren Umfang von einem elastischen Band umgeben und versetzt die Zugankermutter bis zum Überschreiten des Grenzdrehmomentes und einer damit einhergehenden Längung des elastischen Bandes in eine Drehbewegung. Darüber hinaus bietet eine Nuss mit einem elastischen Kugelring den Vorteil, dass die Zugankermuttern trotz unterschiedlicher Ausgangsposition stets zuverlässig von den Nüssen aufgenommen werden. Kommen indes Mehrkant-, insbesondere Sechskantnüsse zur Aufnahme der Zugankermuttern zum Einsatz, ist zu berücksichtigen, dass der Außensechskant der beizudrehenden Zugankermutter und der Innensechskant der Nuss nicht bei allen Nüssen zwangsläufig deckend übereinstimmen muss. Durch geeignete Toleranzen sowie die Anordnung von Führungsflächen an den Nüssen kann diesem Problem bei Mehrkantnüssen begegnet werden.

Das zentrale Reibelement wird vorzugsweise über eine aus dem Zylinderblock herausgeführte Welle in Drehung versetzt, die optional mit einem Motor verbunden ist, um das gleichzeitige Beidrehen sämtlicher Nüsse voll automatisiert durchführen zu können.

Um Winkel- bzw. Teilungsfehler der Flansche auszugleichen ist in einer Ausgestaltung der Erfindung vorgesehen, dass der Kolben einen zentralen Durchgang aufweist, durch den sich das Zugelement erstreckt, wobei das Zugelement drehbar in dem Durchgang geführt ist und sich an seinem der Nuss gegenüberliegenden Ende auf der Oberfläche des Kolbens abstützt. Die zweiteilige Ausführung von Kolben und Zugelement ermöglicht das zum Ausgleich von Winkel- bzw. Teilungsfehlern erforderliche Spiel von etwa 2 mm.

Um beim Aufsetzen der hydraulischen Spannvorrichtung auf den Flansch das Erfassen der Zuganker in den Zugelementen zu automatisieren, ist gemäß der Erfindung jedes Zugelement mit einem gemeinsamen Antrieb verbunden. Der Antrieb umfasst ein Reibelement, wie beispielsweise ein Reibrad oder einen Reibring, das mit einer äußeren Umfangsfläche eines zylindrischen Abschnittes jedes Zugelementes in Berührung steht, wobei sich der zylindrische Abschnitt auf der Oberfläche des Kolbens abstützt. Der Reibring zum Antrieb der Zugelemente kann beispielsweise konzentrisch zu einem Reibrad zum Antrieb jeder Nuss angeordnet sein.

Um nicht nur Blindflansche, sondern auch Rohrverbindungsflansche verschrauben zu können, ist der Zylinderblock zweiteilig, beispielsweise als zweiteiliger Zylinderring ausgeführt, dessen Teile gelenkig miteinander verbunden sind, wobei die Gelenkachse parallel zur Ringachse verläuft. Zum Betrieb wird die hydraulische Spannvorrichtung auseinandergeklappt über das Rohr geführt, um anschließend mit den Zugelementen die Zuganker aufzunehmen. Der Antrieb ist bei einer klappbaren Ausführung der hydraulischen Spannvorrichtung ebenfalls zweiteilig oder als verketteter Antrieb ausgestaltet.

Bei einer klappbaren hydraulischen Spannvorrichtung ist es konstruktiv vorteilhaft, wenn der Durchgang und/oder die Leitung für das Hydraulikmedium durch das Gelenk geführt ist und der Hydraulikanschluss zum Zu- und Abführen des Hydraulikmediums an dem Drehgelenk angeordnet ist.

Flanschverbindungen, die regelmäßig befestigt und/oder gelöst werden müssen, können fest mit einer erfindungsgemäßen hydraulischen Spannvorrichtung verbunden sein.

Überraschend hat sich gezeigt, dass die eingangs beschriebenen Undichtigkeiten an Flanschverbindungen in der vakuumtechnik, insbesondere Hochvakuumtechnik vermieden werden können, wenn eine erfindungsgemäße hydraulische Spannvorrichtung zum Spannen der Zuganker und dem Beidrehen der Zugankermuttern verwendet wird. Der Zylinderring der Spannvorrichtung stützt sich hierzu am Flansch ab, wobei die Zuganker die Reaktionskräfte aufnehmen. Durch Beaufschlagen der Kolbenräume mit Hydraulikflüssigkeit werden die Flanschschneiden gleichmäßig in den Kupfer-Flach-Dichtring eingedrückt. Durch gleichzeitiges Beidrehen der Zugankermuttern bis zu dem durch die kraftschlüssige Verbindung vorgegebenen Grenzdrehmoment wird erreicht, dass mit dem Ablassen der Hydraulikflüssigkeit aus den Kolbenräumen und dem damit einhergehenden Entspannen der Zuganker eine gleichmäßige Kraftverteilung über den Umfang der Flanschverbindungen erreicht wird. Hierdurch lassen sich Undichtigkeiten in der Flanschverbindung weitestgehend vermeiden.

Nachfolgend wird die Erfindung anhand von Ausführungsbeispielen der hydraulischen Spannvorrichtung näher erläutert. Es zeigen
- Figur 1: eine Aufsicht auf eine erfindungsgemäße Spannvorrichtung
- Figur 2: einen Schnitt entlang der Linie A-A nach Figur 1
- Figur 3: einen Schnitt entlang der Linie B-B nach Figur 1.
- Figur 4: eine Aufsicht auf ein Drehgelenk einer zweiteiligen Spannvorrichtung sowie
- Figur 5: einen Schnitt durch eine Flanschverbindung mit aufgesetzter Spannvorrichtung.

Die insgesamt mit 1 bezeichnete hydraulische Spannvorrichtung besteht im wesentlichen aus einem Zylinderring 2, mehreren darin beweglich angeordneten Hohlkolben 3, in denen Zugelemente 4 geführt sind, einem Reibrad 5 sowie einer in Verlängerung jedes Zugelementes 4 angeordneten Nuss 6 zur Aufnahme einer lediglich in der Figur b dargestellten zugankermutter 35. Der Kolbenraum 7 für jeden Hohlkolben 3 wird nach oben und unten jeweils durch eine Dichtung 8, 9 begrenzt. Sämtliche Kolbenräume sind durch Bohrungen 11 untereinander verbunden, so dass das Hydraulikmedium, beispielsweise Öl, von einem Kolbenraum 7 zum jeweils benachbarten Kolbenraum fließen kann.

Das Hydraulikmedium wird über einen Schnellverschlussnippel 12 zu- und abgeführt.

Das Zugelement 4 ist drehbar in dem Durchgang des Hohlkolbens 3 um die Achse 13 geführt. Der Kopf 14 des Zugelementes 4 stützt sich auf der Oberfläche 15 des Kolbens ab, so dass von dem Hohlkolben 3 in Richtung der Achse 13 wirkende Kräfte in das Zugelement 4 übertragen werden können. An dem dem Kopf 14 gegenüberliegenden Ende weist das Zugelement 4 ein Innengewinde 16 zur Aufnahme eines Zugankers der CF-Flanschverbindung auf.

In Verlängerung der Achse 13 des Zugelementes 4 befindet sich die Nuss 6, die die beizudrehende Zugankermutter allseitig umgibt. In dem Ausführungsbeispiel weist die Nuss 6 einen Ring 17 mit sechs Kugeln auf, die an den Außenflächen der aufzunehmenden Sechskant-Zugankermutter anliegen. Der Kugelring 17 wird von einem elastischen Ring 18 umgeben, der auf dic Kugeln eine gleichmäßige Kraft in Richtung der Achse 13 ausübt. Wird ein Grenzdrehmoment beim Anziehen der zugankermuttern 35 überschritten, weichen die in der Nuss zwangsgeführten Kugeln 17 radial nach außen gegen den Widerstand des elastischen Rings 18 aus und rutschen, ohne die zugankermuttern weiter zu drehen.

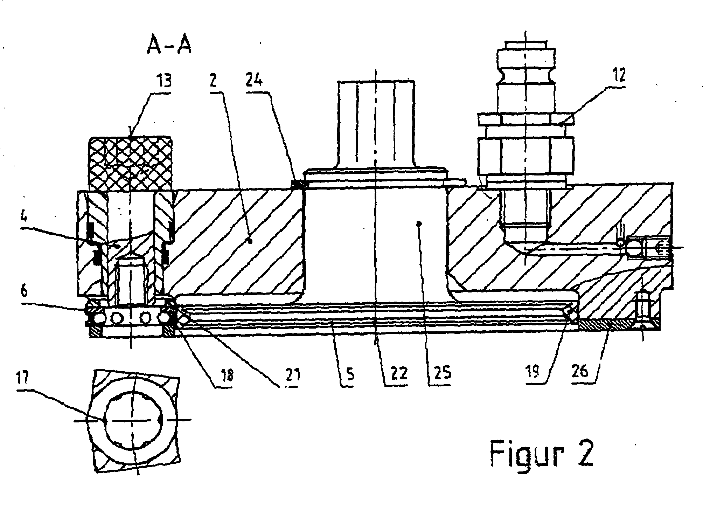

Das Reibrad 5 weist an seinem äußeren Umfang eine Nut zur Aufnahme eines O-Rings 19 auf, der mit der äußeren Umfangsfläche 21 jeder Nuss 6 in Berührung steht, wie dies insbesondere aus Figur 2 erkennbar ist. Die Drehachse 22 des Reibrades 5 verläuft durch den Mittelpunkt des Kreises 23, auf dem die die Kolben 4 führenden Zylinder angeordnet sind. Das Reibrad 5 ist über eine aus dem Zylinderring herausgeführte Welle 25 in Drehung versetzbar. Ein Sicherungsring 24 fixiert die axiale Lage der Welle 25 in dem Zylinderring 2.

Auf der Unterseite wird die hydraulische Spannvorrichtung durch ein Bodenblech 26 abgeschlossen, dass Zugangsöffnungen 27 für die Nüsse 6 und die Innengewinde 16 aufweist.

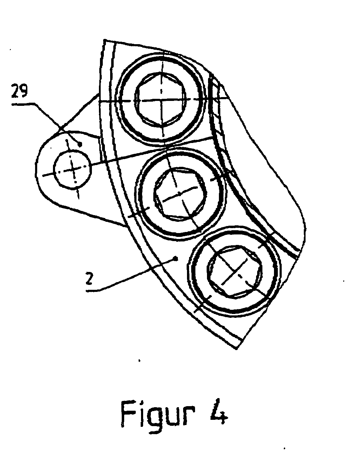

Figur 4 zeigt einen Ausschnitt eines zweiteiligen Zylinderrings 2, dessen Teile über ein Drehgelenk 29 verbunden sind.

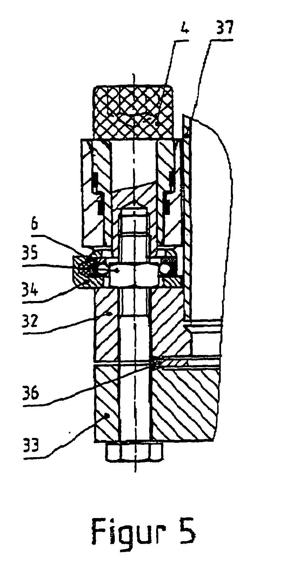

Figur 5 verdeutlicht den Einsatz einer hydraulischen Spannvorrichtung mit zweiteiligem Zylinderring nach Figur 4 beim Spannen von Rohr-Verbindungsflanschen 31, die aus einem Flansch 32 mit daran angesetztem Rohr und einem Blindflansch 33 besteht. Zwischen dem Flansch 32 und dem Blindflansch 33 befindet sich ein Kupfer-Flach-Dichtring 36.

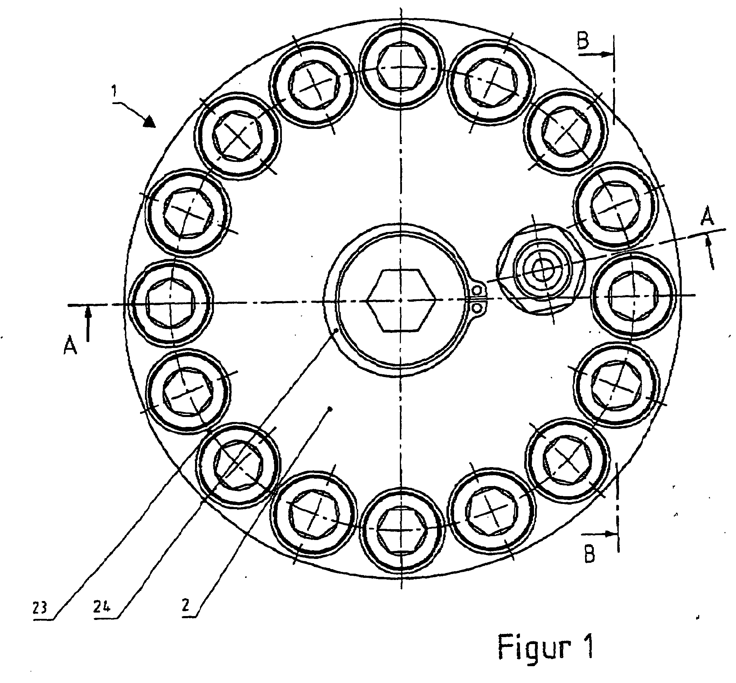

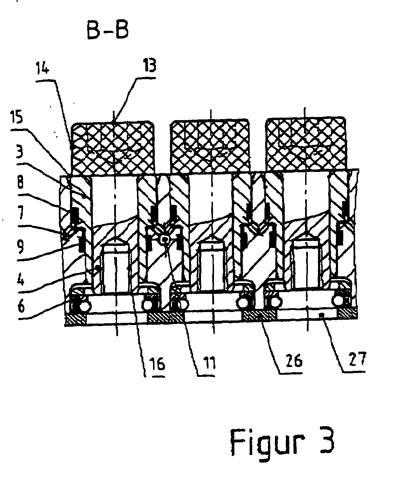

Abweichend zu dem Ausführungsbeispiel nach den Figuren 1 - 3 ist das Reibelement nicht in dem Zylinderring 2, sondern in Form eines Reibringes 34 am äußeren Umfang des Zylinderringes 2 angeordnet. Der um den Zylinderring 2 umlaufende Reibring 34 überträgt die Drehbewegung kraftschlüssig auf die Umfangsfläche 21 jeder Nuss 6. Hierdurch wird jede Zugankermutter 35 nach dem Spannen der Zuganker mit den Zugelementen 4 beigedreht.

Zum Aufsetzen auf die Flanschverbindung 32, 33, 35, 36 wird die hydraulische Spannvorrichtung 1 auseinandergeklappt und über das Rohr 37 geführt, zusammengeklappt und mit dem Bodenblech 26 auf den Flansch 32 aufgesetzt. Hierbei muss gewährleistet sein, dass die Nüsse 6, die Zugankermuttern 35 umgeben.

Die einzelnen Zuganker werden nun an ihren Gewindeenden von den Zugelementen 4 erfasst, in dem deren Innengewinde 16 auf den Gewindeüberstand der Zuganker aufgeschraubt werden. Sobald jeder Zuganker von einem Zugelement 4 erfasst ist, kann mit der Druckbeaufschlagung der Kolbenräume 7 bis zum erforderlichen Verspannungsdruck begonnen werden. Der Zylinderring 2 stützt sich dabei an dem Flansch 32 ab, wobei die Zuganker die Zugkräfte in den Blindflansch 33 einleiten. Dabei werden die Schneidringe des Flajncehes 32 und den Blindflansches 33 gleichmäßig in den Flach-Dichtring 36 gedrückt. Nach Erreichen des Verspannungsdrucks wird der Reibring 34 in Drehung versetzt, um sämtliche Zugankermuttern gleichzeitig bis zur Anlage am Rohrverbindungsflansch beizudrehen. Anschließend wird der Druck in den Kolbenräumen 7 abgebaut, bis die Zuganker und Schrauben die volle Spannkraft übernehmen.

Durch die erfindungsgemäße Spannvorrichtung, insbesondere bei deren Einsatz in der Hochvakuumtechnologie wird das gleichmäßige Verschrauben von Flanschverbindungen erheblich erleichtert; hierdurch können Undichtigkeiten wirksam vermieden werden.

### Bezugszeichenliste

| | |
|---|---|
| 1. | Hydraulische Spannvorrichtung |
| 2. | Zylinderring |
| 3. | Hohlkolben |
| 4. | Zugelemente |
| 5. | Reibrad |
| 6. | Nuss |
| 7. | Kolbenraum |
| 8. | Dichtung |
| 9. | Dichtung |
| 10. | -- |
| 11. | Bohrungen |
| 12. | Schnellverschlussnippel |
| 13. | Achse |
| 14. | Kopf Zugelement |
| 15. | Oberfläche Kolben |
| 16. | Innengewinde |
| 17. | Kugeln |
| 18. | elastischer Ring |
| 19. | O-Ring |
| 20. | -- |
| 21. | Umfangsfläche |
| 22. | Drehachse |
| 23. | Kreis der Zylinder |
| 24. | Sicherungsring |
| 25. | Welle |
| 26. | Bodenblech |
| 27. | Zugangsöffnung |
| 28. | Senkschrauben |
| 29. | Drehgelenk |
| 30. | -- |
| 31. | Rohrverbindungsflansch |
| 32. | Flansch |
| 33. | Blindflansch |
| 34. | Reibring |
| 35. | Zugankermutter |
| 36. | Flach-Dichtring |
| 37. | Rohr |

## Patentansprüche

1. Hydraulische Spannvorrichtung (1) zum Spannen und/oder Lösen von Zugankermutter tragenden Zugankern mit einem Zylinderblock (2) in dem mehrere Kolben (3) beweglich in achsparallelen und kreisförmig zueinander angeordneten Zylindern geführt sind, wobei die Kolbenräume (7) sämtlicher Zylinder über Durchgänge und/oder Leitungen (11) für ein Hydraulikmedium miteinander verbunden sind, und einem jedem Kolben zugeordneten Zugelement (4) zum Erfassen der Zuganker, **dadurch gekennzeichnet,**
- **dass** in Verlängerung jedes Zugelementes (4) eine Nuss (6) zur Aufnahme der Zugankermutter (35) drehbar in dem Zylinderblock angeordnet und jede Nuss (6) mit einem gemeinsamen Antrieb (5) verbunden ist,
- **dass** der gemeinsame Antrieb (5) und jede Nuss (6) kraftschlüssig miteinander verbunden sind,
- **dass** der Antrieb ein Reibelement umfasst, das mit einer äußeren Umfangsfläche (21) jeder Nuss (6) in Berührung steht und
- **dass** jedes Zugelement (4) mit einem gemeinsamen Antrieb verbunden ist, in dem ein Reibelement mit einer äußeren Umfangsfläche eines zylindrischen Abschnitts jedes Zugelementes (4) in Berührung steht, wobei sich der zylindrische Abschnitt (14) auf der Oberfläche (15) des Kolbens (3) abstützt.

2. Hydraulische Spannvorrichtung nach Anspruch 1, **dadurch gekennzeichnet, dass** der Antrieb (5) für jede Nuss ein Reibelement, nämlich ein Reibrad (5) umfasst

3. Hydraulische Spannvorrichtung nach Anspruch 2, **dadurch gekennzeichnet, dass** die Drehachse (22) des Reibrades (5) durch dem Mittelpunkt des Kreises (23) verläuft, auf dem die Zylinder angeordnet sind.

4. Hydraulische Spannvorrichtung nach einem der Ansprüche 2 bie 3, **dadurch gekennzeichnet, dass** das Reibelement über eine aus dem Zylinderblock herausgeführte Welle (25) in Drehung versetzbar ist.

5. Hydraulische Spannvorrichtung nach einem der Ansprüche 1 bis 4, **dadurch gekennzeichnet, dass** der gemeinsame Antrieb (5) für jede Nuss (6) mit einem Motor verbunden ist.

6. Hydraulische Spannvorrichtung nach einem der Ansprüche 1 bis 5, **dadurch gekennzeichnet, dass** das Zugelement (4) integraler Bestandteil des drehbar in dem Zylinder geführten Kolbens ist.

7. Hydraulische Spannvorrichtung nach einem der Ansprüche 1 bis 5, **dadurch gekennzeichnet, dass** der Kolben (3) einen zentralen Durchgang aufweist, durch den sich das Zugelement (4) erstreckt, wobei das Zugelement (4) drehbar in dem Durchgang geführt ist und sich an seinem der Nuss (6) gegenüberliegenden Ende auf der Oberfläche (15) des Kolbens abstützt.

8. Hydraulische Spannvorrichtung nach einem der Ansprüche 1 bis 7, **dadurch gekennzeichnet, dass** der Kolbenraum (7) des Zylinders nach oben und unten jeweils durch eine Dichtung (8,9) begrenzt wird.

9. Hydraulische Spannvorrichtung nach einem der Ansprüche 1 bis 8, **dadurch gekennzeichnet, dass** Mehrkantnüsse die Zugankermuttern (35) aufnehmen.

10. Hydraulische Spannvorrichtung nach einem der Ansprüche 1 bis 9, **dadurch gekennzeichnet, dass** jede Nuss (6) einen elastischen Kugelring (17, 18) aufweist, der die Zugankermutter (35) aufnimmt.

11. Hydraulische Spannvorrichtung nach Anspruch 1, **dadurch gekennzeichnet, dass** die Drehachse des Reibrades oder Reibringes durch dem Mittelpunkt des Kreises (23) verläuft, auf dem die Zylinder angeordnet sind.

12. Hydraulischen Spannvorrichtung nach einem der Ansprüche 1 bis 11, **dadurch gekennzeichnet, dass** der Zylinderblock zweiteilig ausgeführt und die Teile des Zylinderblocks gelenkig miteinander verbunden sind, wobei das Gelenk (29) lediglich eine ebene Bewegung beider Teile zulässt.

13. Hydraulischen Spannvorrichtung nach einem der Ansprüche 1 bis 12, **dadurch gekennzeichnet, dass** der Zylinderblock als zweiteiliger zylinderring (2) ausgeführt ist, dessen Teile gelenkig miteinander verbunden sind, wobei die Gelenkachse parallel zur Ringachse verläuft.

14. Hydraulische Spannvorrichtung nach Anspruch 13, **dadurch gekennzeichnet, dass** der Durchgang (11) und/oder die Leitung für das Hydraulikmedium durch das Gelenk (29) geführt ist.

15. Hydraulische Spannvorrichtung nach Anspruch 13 oder 14, **dadurch gekennzeichnet, dass** der Hydraulikanschluss (12) an dem Gelenk (29) angeordnet ist.

16. Hydraulischen Spannvorrichtung nach einem der Ansprüche 1 bis 15, **dadurch gekennzeichnet, dass** die Spannvorrichtung fest mit einer Flanschverbindung verbunden ist.

17. Verwendung der hydraulischen Spannvorrichtung nach einem der Ansprüche 1 bis 16 zum Spannen der Zuganker und Beidrehen der Zugankermuttern von Flanschverbindungen in der Vakuumtechnik, insbesondere Hochvakuumtechnik.

## Claims

1. A hydraulic tightening device (1) for tightening and/or releasing tie rods that are equipped with tie rod nuts, having a cylinder block (2) in which multiple pistons (3) are movably housed in cylinders that are arranged axially parallel in a circle relative to each other, wherein the piston spaces (7) of all the cylinders are connected to each other via passthroughs and/or lines (11) for a hydraulic medium, and with a tie element (4) assigned to each piston for gripping the tie rods,
**characterised in that**
- a bolt lock (6) for receiving the tie rod nut (35) is arranged rotatably in the cylinder block as an extension of each tie element (4), and each bolt lock (6) is connected to a common drive unit (5),
- the common drive unit (5) and each bolt lock (6) are in non-positive locking connection with each other,
- the drive unit includes a friction element that is in contact with an outer peripheral area (21) each bolt lock (6) and
- each tie element (4) is connected to a shared drive unit, in which a friction element is in contact with an outer peripheral surface of a cylindrical section of each tie element (4), the cylindrical section (14) being supported on the surface (15) of the piston (3).

2. The hydraulic tightening device as recited in claim 1,
**characterised in that**
the drive unit (5) includes a friction element, in particular a friction wheel (5) for each bolt lock.

3. The hydraulic tightening device as recited in claim 2,
**characterised in that**
the axis of rotation (22) of the friction wheel (5) passes through the epicentre of the circle (23) on which the cylinders are arranged.

4. The hydraulic tightening device as recited in either of claims 2 or 3,
**characterised in that**
the friction element is able to be rotated via a shaft (25) that protrudes from the cylinder block.

5. The hydraulic tightening device as recited in any of claims 1 to 4,
**characterised in that**
the shared drive unit (5) for each bolt lock (6) is connected to a motor.

6. The hydraulic tightening device as recited in any of claims 1 to 5,
**characterised in that**
the tie element (4) is an integral part of the piston that is housed rotatably in the cylinder.

7. The hydraulic tightening device as recited in any of claims 1 to 5,
**characterised in that**
the piston (3) is furnished with a central passthrough, through which the tie element (4) extends, the tie element (4) is guided rotatably in the passthrough and the end thereof facing the bolt lock (6) is supported on the surface (15) of the piston.

8. The hydraulic tightening device as recited in any of claims 1 to 7,
**characterised in that**
the piston space (7) of the cylinder is delimited at the top and bottom by a seal (8, 9) in each case.

9. The hydraulic tightening device as recited in any of claims 1 to 8,
**characterised in that**
the polygon head bolt locks accommodated the tie rod nuts (35).

10. The hydraulic tightening device as recited in any of claims 1 to 9,
**characterised in that**
each bolt lock (6) has an elastic ball ring (17, 18) that accommodates the tie rod nuts (35).

11. The hydraulic tightening device as recited in claim 1,
**characterised in that**
the axis of rotation of the friction wheel or friction ring passes through the epicentre of the circle (23) in which the cylinders are arranged.

12. The hydraulic tightening device as recited in any of claims 1 to 11,
**characterised in that**
the cylinder block is constructed in two parts and the parts of the cylinder block are connected via an articulated joint, the joint (29) allowing only planar movement of the two parts.

13. The hydraulic tightening device as recited in any of claims 1 to 12,
**characterised in that**
the cylinder block is constructed as a bi-component cylinder ring (2), the parts of which are connected via an articulated joint, wherein the axis of articulation extends parallel to the ring axis.

14. The hydraulic tightening device as recited in claim 13,
**characterised in that**
the passthrough (11) and/or the line for the hydraulic medium is guided through the joint (29).

15. The hydraulic tightening device as recited in either of claims 13 or 14,
**characterised in that**
the hydraulic connection (12) is arranged on the joint (29).

16. The hydraulic tightening device as recited in any of claims 1 to 15,
**characterised in that**
the tightening device is permanently attached to a flange connection.

17. Use of the hydraulic tightening device as recited in any of claims 1 to 16 for tightening the tie rods and turning the tie rod nuts on flange connections in vacuum equipment, particularly high-vacuum equipment.

## Revendications

1. Dispositif de serrage hydraulique (1) pour serrer et/ou desserrer des tirants d'ancrage portant des écrous de tirants d'ancrage, avec un bloc-cylindres (2) dans lequel plusieurs pistons (3) sont guidés de façon mobile dans des cylindres disposés de façon parallèle à l'axe et de façon circulaire entre eux, les chambres de pistons (7) de tous les cylindres étant reliées entre elles par l'intermédiaire de passages et/ou de conduits (11) pour un fluide hydraulique et avec un élément de traction (4) associé à chaque piston, pour saisir le tirant d'ancrage,
**caractérisé**
- **en ce que** dans le prolongement de chaque élément de traction (4), une noix (6) est disposée de façon rotative dans le bloc-cylindres, pour le logement de l'écrou du tirant d'ancrage (35) et en ce que chaque noix (6) est reliée à un entraînement commun (5),
- **en ce que** l'entraînement commun (5) et chaque noix (6) sont mutuellement reliés par complémentarité de force,
- **en ce que** l'entraînement comprend un élément de friction, qui est en contact avec une surface périphérique extérieure (21) de chaque noix (6) et
- **en ce que** chaque élément de traction (4) est relié avec un entraînement commun, en ce qu'un élément de friction est en contact avec une surface périphérique extérieure d'un tronçon cylindrique de chaque élément de traction (4), le tronçon cylindrique (14) s'appuyant sur la surface (15) du piston (3).

2. Dispositif de serrage hydraulique selon la revendication 1, **caractérisé en ce que** l'entraînement (5) comporte pour chaque noix un élément de friction, à savoir un galet de friction (5).

3. Dispositif de serrage hydraulique selon la revendication 2, **caractérisé en ce que** l'axe de rotation 22 du galet de friction (5) s'étend à travers le point central du cercle (23) sur lequel le cylindre est disposé.

4. Dispositif de serrage hydraulique selon l'une quelconque des revendications 2 à 3, **caractérisé en ce que** l'élément de friction peut être amené en rotation par l'intermédiaire d'un arbre (25) sortant du bloc-cylindres.

5. Dispositif de serrage hydraulique selon l'une quelconque des revendications 1 à 4, **caractérisé en ce que** l'entraînement commun (5) pour chaque noix (6) est relié à un moteur.

6. Dispositif de serrage hydraulique selon l'une quelconque des revendications 1 à 5, **caractérisé en ce que** l'élément de traction (4) est une partie intégrante du piston guidé en rotation dans le cylindre.

7. Dispositif de serrage hydraulique selon l'une quelconque des revendications 1 à 5, **caractérisé en ce que** le piston (3) comporte un passage central à travers lequel s'étend l'élément de traction (4), l'élément de traction (4) étant guidé de façon rotative dans le passage et s'appuyant sur la surface (15) du piston, par son extrémité opposée à la noix (6).

8. Dispositif de serrage hydraulique selon l'une quelconque des revendications 1 à 7, **caractérisé en ce que** la chambre de piston (7) du cylindre est limitée vers le haut et vers le bas par un joint (8, 9).

9. Dispositif de serrage hydraulique selon l'une quelconque des revendications 1 à 8, **caractérisé en ce que** des noix polygonales réceptionnent les écrous de tirants d'ancrage (35).

10. Dispositif de serrage hydraulique selon l'une quelconque des revendications 1 à 9, **caractérisé en ce que** chaque noix (6) comporte une bague de roulement à billes (17, 18) qui réceptionne l'écrou de tirant d'ancrage (35).

11. Dispositif de serrage hydraulique selon la revendication 1, **caractérisé en ce que** l'axe de rotation du galet de friction ou de la bague de friction s'étend à travers le point central du cercle (23) sur lequel sont disposés les cylindres.

12. Dispositif de serrage hydraulique selon l'une quelconque des revendications 1 à 11, **caractérisé en ce que** le bloc-cylindres est réalisé en deux éléments et les éléments du bloc-cylindres sont reliés entre eux de façon articulée, l'articulation (29) admettant uniquement un déplacement plan des deux éléments.

13. Dispositif de serrage hydraulique selon l'une quelconque des revendications 1 à 12, **caractérisé en ce que** le bloc-cylindres est réalisé sous la forme d'une bague cylindrique en deux éléments (2) dont les éléments sont reliés entre eux de façon articulée, l'axe d'articulation s'étendant à la parallèle de l'axe de la bague.

14. Dispositif de serrage hydraulique selon la revendication 13, **caractérisé en ce que** le passage (11) et/ou le conduit pour le fluide hydraulique est guidé à travers l'articulation (29).

15. Dispositif de serrage hydraulique selon la revendication 13 ou 14, **caractérisé en ce que** le raccord hydraulique (12) est disposé sur l'articulation (29).

16. Dispositif de serrage hydraulique selon l'une quelconque des revendications 1 à 15, **caractérisé en ce que** le dispositif de serrage est fixement relié avec un assemblage par brides.

17. Utilisation du dispositif de serrage hydraulique selon l'une quelconque des revendications 1 à 16 pour le serrage du tirant d'ancrage et pour faire tourner les écrous de tirants d'ancrage d'assemblages par brides dans la technique du vide, notamment dans la technique du vide poussé.
